# EUROPEAN PATENT APPLICATION

(11) **EP 1 552 750 A1**
(43) Date of publication of application: **13.07.2005**
(21) Application number: 03733457.0
(22) Date of filing: 17.06.2003
(51) Int. Cl.: A21D 13/04, A23G 3/00, A23L 1/10

(54) **RICE FLOUR COMPOSITION FOR PRODUCING BREADS/CAKES, RICE FLOUR BREADS AND CAKES AND PROCESS FOR PRODUCING THE SAME**

(30) Priority: 12.07.2002 JP 2002203784; 31.07.2002 JP 2002223548; 16.01.2003 JP 2003007757
(71) Applicant: Shitogi Japan Co., Ltd., Ikeda-shi, Osaka 563-0043 (JP)
(72) Inventor: FUKUMORI, Kouichi, Ikeda-shi, Osaka 563-0043 (JP)
(74) Representative: Hart Davis, Jason
(86) International application number: PCT/JP2003/007634
(87) International publication number: WO 2004/006681

(57) **Abstract**

A rice flour composition is provided, which includes a rice flour produced by a conventional flour milling method without any special apparatus or treatment and which can produce breads or confectionery excellent in appearance, internal phase, taste, and keeping quality, through a process similar to a conventional process of making breads or confectionery. Also provided are a dough product and a food product each produced with such a composition, and a method of producing such a food product.

Such a rice flour composition for use in breads or confectionery comprises: 100 parts by weight of grain flour including 80 to 85 parts by weight of rice flour and 15 to 20 parts by weight of gluten; and 1 to 30 parts by weight of maltose, wherein the rice flour is a product of stamp milling, roll milling, stone milling, jet stream milling, or high speed rotation impact milling. A dough product and a food product are each produced with such a composition. A method of producing such a food product is also provided.

## Description

### Technical Field

The invention relates to a rice flour composition for use in breads or confectionery, a rice-flour bread or confection product, and a method of producing the same. Specifically, the invention relates to a rice flour composition comprising non-glutinous rice flour or the like as a main ingredient, a fermented or unfermented dough product or a bread or confection product produced with such a composition, and a method of producing the bread or confection product.

### Background Art

The principal material used for fermented breads is generally wheat flour or rye flour. People like a puffy soft taste of wheat breads. It is known that when wheat flour is kneaded with water, wheat flour proteins, gliadin and glutenin, form gluten, which is a gummy and viscoelastic product. It is also known that the gluten performs the function of keeping carbon dioxide gas produced by fermentation in the dough so that fermented breads have an increased volume.

In Japan and Southeast Asian nations, on the other hand, rice is traditionally the chief staple of the diet. In Japan, however, the consumption of rice decreases with each passing year. There has been a demand for a rise in food self-sufficiency ratio by consumption of rice on which the self sufficiency is relatively high. For the purpose of solving the problem of a potential lack of food, there has been a demand for expansion of applications of rice or increase in consumption of rice, because the yield of rice per unit area is generally higher than that of wheat and because rice is a nutritionally well balanced foodstuff.

A method is proposed using rice flour in place of wheat flour as the principal material for fermented breads. Conventionally, however, fermented dough as in the case of wheat flour is not sufficiently produced by the use of rice flour for Japanese style confectionery, such as non-glutinous rice flour, in place of wheat flour. In such a case, breads with inferior taste are only produced. Thus, some methods are proposed for using rice flour in place of wheat flour, for example, as follows. Japanese Patent Application Publication (JP-B) No. 04-73979 discloses a method of producing rice flour, including the steps of coarsely crushing rice in a roll mill and then finely crushing the rice in an air crusher in such a manner that 90% or more of the crushed rice passes through a 200 mesh sieve. JP-B No.07-100002 discloses a method including the steps of soaking rice in an aqueous pectinase solution and then performing dewatering, flour milling, and calcining, Japanese Patent Application Laid-Open (JP-A) No. 2002-153215 discloses a method including the steps of soaking rice in an organic acid-containing water solution (optionally containing pectinase) and then performing dewatering and flour milling.

However, the above methods of producing rice flour require a fine pulverization technique for the special milling step and/or a treatment step with an enzyme such as pectinase or an organic acid and thus cost high.

It is therefore an object of the invention to provide a rice flour composition that includes rice flour produced by a conventional milling method without any special technique or treatment and that can produce breads or confectionery excellent in appearance, internal phase, taste, and keeping quality, through a process similar to a conventional process of making breads or confectionery, to provide a dough product and a food product each produced with such a composition, and to provide a method of producing such a food product.

### Disclosure of Invention

In order to achieve the above object, the inventor has made active investigations on materials to be added and fermentation conditions while using rice flour such as non-glutinous rice flour, which has conventionally been believed to be not useful because of its particle size larger than wheat flour, and surprisingly found that the object can be achieved with the rice flour composition constituted as described below and with the process including the steps as described below, in completing the invention.

Thus, the invention is directed to a rice flour composition for use in breads or confectionery, comprising: 100 parts by weight of grain flour including 80 to 85 parts by weight of rice flour and 15 to 20 parts by weight of gluten; and 1 to 30 parts by weight of maltose, wherein the rice flour is a product of stamp milling, roll milling, stone milling, jet stream milling, or high speed rotation impact milling.

Preferably, with respect to particle size, the rice flour contains a fraction retained on a 140 mesh sieve and a fraction retained on a 200 mesh sieve, wherein the total of both fractions make up 20 to 50% by weight of the rice flour.

The rice flour is preferably a product of stone milling. The stone milling is preferably water milling.

Preferably, the rice flour composition further comprises 1 to 30 parts by weight of white rice bran or/and one or more additives selected from the group consisting of sugars, exclusive of maltose, salt, gums, milk components, egg components, fats and oils, inorganic salts, and vitamins.

The invention is directed to a method of producing a dough product for use in breads or confectionery, including the steps of: using a rice flour composition comprising 100 parts by weight of grain flour including 80 to 85 parts by weight of rice flour and 15 to 20 parts by weight of gluten and 1 to 30 parts by weight of maltose; mixing the rice flour composition with at least water and yeast and optionally an oil or fat and kneading them; and then making dough substantially without undergoing primary fermentation. Preferably, the method further includes the step of shaping the produced dough. In the method, the time required for the primary fermentation is preferably 0 to 30 minutes.
Preferably, the method further includes the step of subjecting the shaped dough to final fermentation.

The invention is also directed to a dough product for use in rice flour breads or confectionery, characterized in that it is produced by the above method of producing the dough.

The dough product of the invention is characterized in that it is produced by the action of yeast on the rice flour composition. The dough product of the invention is also characterized in that it is produced by the addition of a liquid to the rice flour composition.

In a first mode of the invention, a method of producing a rice flour bread or confection product includes the steps of: using a rice flour composition comprising 100 parts by weight of grain flour including 80 to 85 parts by weight of rice flour and 15 to 20 parts by weight of gluten and 1 to 30 parts by weight of maltose; mixing the rice flour composition with at least water and yeast and optionally an oil or fat and kneading them; then making dough substantially without undergoing primary fermentation; shaping the dough; subjecting the shaped dough to final fermentation; and cooking the finally fermented dough by baking, frying, steam-boiling, microwave-heating, or pressurizing and heating it. The time required for the primary fermentation is preferably O to 30 minutes.

In a second mode of the invention, a method of producing a rice flour bread or confection product includes the steps of: mixing the rice flour composition with water and yeast and fermenting the mixture to make fermented dough; and shaping the fermented dough and cooking the shaped dough by baking, frying, steam-boiling, microwave-heating, or pressurizing and heating it.

In a third mode of the invention, a method of producing a rice flour bread or confection product includes the steps of: mixing the rice flour composition with a liquid to make dough; and shaping the dough and cooking the shaped dough by baking, frying, steam-boiling, microwave-heating, or pressurizing and heating it.

The invention is also directed to a rice flour bread or confection product characterized in that it is produced by the above method of producing the rice flour bread or confection product. The rice flour bread or confection product is also characterized in that it is produced by baking, frying, steam-boiling, microwave-heating, or pressurizing and heating the above dough. Such a rice flour bread or confection product is preferably white table bread, bread type roll (*Koppepan*), butter roll, deep-fried bread, confectionery bread, French bread, German bread, bagel, Danish pastry, Chinese style steamed bread, yeast doughnut, pretzel, pizza, or nan; or cake, pie, scone, muffin, or cream puff.

The rice flour composition of the invention can form a raw material that includes a rice flour produced by a conventional milling method and can be used to produce rice flour breads or confectionery by a process similar to a conventional wheat-flour bread or confectionery process. Any of a variety of auxiliary materials may be added to the rice flour composition to form a raw material convenient for the production of any of a variety of breads or confections.

According to the inventive dough making method, dough for rice flour breads or confectionery can easily be produced with the rice flour composition, which comprises, as the main ingredient, a rice flour produced by a conventional milling method. Any of a variety of auxiliary materials may be added to the rice flour composition to form a dough convenient for the production of any of a variety of breads or confections.

The fermented dough product of the invention or the dough product of the invention can produce savings in time and labor for dough process and can produce breads or confections with less variation in quality within the desired time period, so that fresh pieces of bread or confection with a constant quality can be provided for consumers at many places. The inventive fermented dough product or the inventive dough product can be resistant to quality degradation in storage at low temperatures or in frozen storage over a prolonged period and can produce breads or confections with a constant quality within a certain time period.

According to the inventive method of producing the rice flour bread or confection in the first mode, the primary fermentation process can significantly be curtailed or omitted, not only so that the time period of the manufacturing process can be short but also so that rice flour breads or confections with good appearance, good internal phase, good taste, and good keeping quality, equal or superior to those of wheat flour breads or confections, can be produced by a process with good machinability and good workability in existing equipment.

According to the inventive method of producing the rice flour bread or confection in the second or third mode, rice flour breads or confections with good appearance, good internal phase, good taste, and good keeping quality, equal or superior to those of wheat flour breads or confections, can be produced with the inventive rice flour composition or the inventive dough product in existing equipment. In the case of wheat flour, the fermentation process is significantly influenced by the ambient temperature and thus requires skill. In contrast, in the production method according to the second mode of the invention, the use of the inventive rice flour composition can reduce the fermentation time so that the required time can be reduced by one-half. In addition, the fermentation is less influenced by the ambient temperature so that the rice flour bread or confection can easily be produced only under the control of the fermentation time.

The rice flour bread or confection product of the invention can have a similar taste to the corresponding wheat-flour bread or confection and can also have a chewy or moist feeling specifically derived from the raw material of rice. In addition, the rice flour bread or confection product of the invention has good keeping quality and is resistant to degradation in taste, so that its distribution route can be wider. It can lead to an increase in not only rice consumption but also total consumption of breads and confectionery.

### Best Mode for Carrying Out the Invention

According to the invention, the rice flour composition for use in breads or confectionery comprises: 100 parts by weight of grain flour including 80 to 85 parts by weight of rice flour and 15 to 20 parts by weight of gluten; and 1 to 30 parts by weight of maltose, wherein the rice flour is a product of stamp milling, roll milling, stone milling, jet stream milling, or high speed rotation impact milling.

The rice flour for use in the invention may be a pulverized or powdered product of non-glutinous or glutinous raw rice. Examples of the species of the non-glutinous rice include, but are not limited to, japonica rice, indica rice and javanica rice. Any species of glutinous rice may also be used without limitation. Before pulverization, the raw rice may be, but not limited to, milled rice, brown rice or hulled rice, scrap rice, rice of old crop, or the like.

The rice flour is a product of a conventional milling method such as stamp milling, roll milling, stone milling, jet stream milling, and high speed rotation impact milling.

In such a milling method, brown rice or milled rice from the brown rice, washed or not washed, is pulverized in a milling apparatus corresponding to each milling method, and sifted through a sieve(s). Rice or rice flour may be dried before or after the pulverization depending on the milling method. If the rice-washing step is omitted from the milling process, the step of drying rice flour may also be omitted.

Examples of the milling device or apparatus include a pestle or a stamp mill for stamp milling, a roll mill for roll milling, a variety of stone grist mills for stone milling, an jet stream crusher for jet stream milling, and a hammer mill or a pin mill for high speed rotation impact milling. The stone milling may be dry milling or water milling (wet milling) with any of a variety of stone mills. The high speed rotation impact milling may also be dry milling or wet milling with a hammer mill or a pin mill.

The rice flour after the pulverization by any of a variety of milling methods is preferably sifted through a sieve(s) to have adjusted particle sizes. Rice flour sifted through a sieve of 80 to 100 meshes is preferably used for good finished quality of rice flour bread.

The rice flour obtained as shown above may be a rice flour called *Joyoko* or *Joshinko* (non-glutinous rice flour), *Shiratamako* (glutinous rice flour milled in water), or *Gyuhiko* (glutinous rice flour), which is conventionally used as a raw material for Japanese style confectionery. Of course, any other rice flour produced according to the above milling method may also be used without limitation.

As regards the particle size, the rice flour may contain a fraction retained on a 140 mesh sieve and a fraction retained on a 200 mesh sieve, wherein the total of both fractions preferably make up 20 to 50% by weight, more preferably 25 to 40% by weight, still more preferably 30 to 35% by weight of the rice flour. If the particle size of the rice flour satisfies the above conditions, the workability can be good in the process of making the dough of the invention, and the resulting bread or confection can have good appearance and good internal phase.

The particle size may be determined by a process including the steps of sifting a specific weight of the rice flour through a 100 mesh sieve, sifting the 100 mesh pass fraction through a 140 mesh sieve and a 200 mesh sieve, sequentially, weighing rice flour retained on each sieve, and calculating the total of the weights. For good fermentation, milling is preferably performed in such a manner that the fraction retained on the 100 mesh sieve makes up 10% by weight or less of the rice flour for use in the inventive process.

The water content of the rice flour varies with the species of the raw rice and the milling method but is generally from 7 to 15%, preferably from 11 to 13.5%. The water content may be determined by a process including the steps of measuring the weight of the rice flour before drying, drying the rice flour under ordinary pressure at 100°C by heat drying method, measuring the weight of the dried rice flour after a constant weight is reached, and a value is calculated by the following formula: [(weight before drying-weight after drying)/weight before drying]x100. If the water content is within the above range, the rice flour can be resistant to solidification, and the workability can be good in the process of making the inventive dough.

The gluten for use in the invention is preferably vital gluten.

In the invention, the grain flour comprises the rice flour and the gluten. Depending on the type of the bread or confection to be produced, the rice flour has a ratio of 80 to 85 parts by weight, and the gluten 20 to 15 parts by weight. Namely, the rice flour and the gluten are mixed in a weight ratio of from 80:20 to 85:15. In terms of producing dough with most preferred expansion, 85 parts by weight of rice flour is preferably mixed with 15 parts by weight of gluten.

In the invention, the maltose is added in order to improve the compatibility between rice flour and gluten. The ratio of the maltose is from 1 to 30 parts by weight, preferably 1.5 to 3 parts by weight, based on 100 parts by weight of the grain flour.

Preferably, the rice flour composition further comprises white rice bran.

The white rice bran for use in the invention may be a product of removing the bran of the hull part of brown rice (red bran) from the bran produced by polishing "brewer's rice" as a raw material for rice wine (sake). Examples of the white rice bran include medium rice bran at a polishing rate of about 10% to 15%, *Johakuko* (fine white rice ban) at a polishing rate of about 15% to 25%, and extra fine rice bran at a polishing rate of 25% or more. One of these types of white rice bran may be used alone, or two or more thereof may be mixed in any ratio. Herein, the polishing rate is the value calculated by the formula: [(weight of brown rice-weight of rice after polishing)/weight of brown rice]x100.

The ratio of the white rice bran may be from 1 to 30 parts by weight, preferably from 5 to 20 parts by weight, more preferably 7.5 to 15 parts by weight, based on 100 parts by weight of the grain flour. If the content of the white rice bran in the rice flour composition is within the above range, the workability or the machinability can be further improved in the process of making the dough.

If necessary depending on the type of the bread or confection to be produced, the rice flour composition of the invention may preferably further contain one or more additives selected from the group consisting of sugars, exclusive of maltose, salt, gums, milk components, egg components, fats and oils, inorganic salts, and vitamins.

Examples of the sugars include such sugars as glucose, fructose, lactose, sucrose, and isomaltose, and sugar alcohols such as sorbitol, maltitol, palatinit, and hydrogenated starch syrup.

Refined salt containing 99% or more of sodium chloride or non-refined salt such as solar salt and crude salt may be used without limitation as the salt.

Any gum effective at improving the compatibility among rice flour, gluten, white rice bran, and any other material may be used without limitation, and examples of such a gum include alginic acid, xanthan gum, dextrin, and cellulose.

Examples of the milk components include dried milk, skimmed milk powder and dried soybean milk.

Examples of the egg components include egg yolk, egg white, whole egg, and any other egg-derived components.

Examples of the fate and oils include butter, margarine, shortening, lard, and olive oil.

Examples of the inorganic salts include ammonium chloride, magnesium chloride, ammonium carbonate, ammonium hydrogenearbonate, sodium hydrogencarbonate, potassium carbonate, calcium carbonate, ammonium sulfate, calcium sulfate, magnesium sulfate, tricalcium phosphate, diammonium hydrogenphosphate, ammonium dihydrogenphosphate, calcium monohydrogenphosphate, calcium dihydrogenphosphate, calcined calcium, and ammonium alum.

Examples of the vitamins include vitamin C, vitamin B₁, vitamin B₂, vitamin D, vitamin E, and carotene.

Within the limits of the object of the invention, the inventive rice flour composition may contain any other foodstuff or food additive, such as a fruit, seed or branch or leaf of a plant, yeast food, and an emulsifier.

The content of each material in the rice flour composition may be appropriately set depending on the type of the bread or confection.

The rice flour composition of the invention may be provided as a flour premix for commercial use or home use. Dough (or fermented dough) for rice flour breads or confections can industrially produced or home-produced with the rice flour composition appropriately. The dough can be cooked to produce the rice flour breads or confections appropriately.

In the first mode of the invention, the method of producing a dough product for use in breads or confectionery includes the steps of: mixing the rice flour composition with at least water and yeast and optionally an oil or fat and kneading them; and then making dough substantially without undergoing primary fermentation. If desired, any other material may be added to the rice flour composition. In a case where a fat or oil is added, it is important that the fat or oil, water and yeast should be mixed and kneaded at the same time. If they are mixed and kneaded at the same time, it can be difficult for water to go into the rice flour particles so that light dough can be produced.

The water may be added in any form without limitation, and it may be added in the liquid form of cow's milk. In a case where a rice flour with a water content of 14% is used, the amount of the added water should be from 75 to 90 parts by weight, based on 100 parts by weight of the grain flour. If the amount of the added water is less than 75 parts by weight, the resulting bread or confection can have a powdery taste. If more than 90 parts by weight, the dough can have a gruel-like form and thus have poor workability or machinability. If any other liquid component such as cow's milk and egg is added to form the dough, the amount of water in such a liquid component should be included in the amount of the added water.

In a case where white rice bran is further added, 6 to 7 parts by weight of additional water should further be added per 10 parts by weight of the white rice bran, based on 100 parts by weight of the grain flour.

The yeast may be any baker's yeast of Saccharomyces cerevisiae generally used for the production of breads and confectionery, and examples thereof include live yeast and dry yeast. The addition amount of the live yeast may be appropriately set depending on the type of the yeast. The addition amount of the dry yeast is generally from about 0.5 to about 2 parts by weight based on 100 parts by weight of the grain flour. Any other auxiliary material may also be added to the rice flour composition.

A person skilled in the art would readily set the mixing conditions with a commercially available mixer, depending on the type of the bread or confection to be produced. Similarly, a person skilled in the art would readily set the kneading temperature, which is generally from 20 to 30°C, preferably from 25 to 30°C.

In the first mode of the invention, it is important that the process substantially does not undergo the primary fermentation. Thus, the time required for the primary fermentation (floor time) is preferably 0 to 30 minutes. In the case of live yeast, the floor time is preferably 0 minutes. In the case of dry yeast, the floor time is preferably about 30 minutes at a temperature equal to the above kneading temperature. In a case where the dough is produced without any oil or fat, dry yeast is preferably used.

The resulting dough is then subjected to the shaping step. The produced dough is cut into pieces, each with the desired weight. Each dough piece is shaped into the desired bread or confection form. Before the shaping step, a bench time of 15 to 25 minutes is preferably provided.

The shaped dough is subjected to the final fermentation step. Since the inventive process substantially does not undergo the primary fermentation step, enough time (enough proofing time) should be taken for the final fermentation step. A person skilled in the art would readily set the proofing time, which is generally 30 minutes or more, preferably from 40 to 60 minutes, at a temperature of 35 to 38°C at a humidity of 75 to 80%.

In the second mode of the invention, the fermented dough is produced by a process including the steps of adding water and yeast to the rice flour composition, optionally adding any other material thereto, mixing them, and fermenting the mixture for a specific time period. The water may be added in any form, and for example, the water may be added in the liquid form of cow's milk.

In a case where a rice flour with a water content of 14% is used, the amount of the added water may be from 75 to 90 parts by weight, based on 100 parts by weight of the grain flour. If the amount of the added water is less than 75 parts by weight, the resulting bread or confection can have a powdery taste. If more than 90 parts by weight, the dough can have a gruel-like form and thus have poor workability or machinability. If any other liquid component such as cow's milk and egg is added to form the dough, the amount of water in such a liquid component should be included in the amount of the added water.

In a case where white rice bran is further added, 6 to 7 parts by weight of additional water should further be added per 10 parts by weight of the white rice bran, based on 100 parts by weight of the grain flour.

In the third mode of the invention, a dough product for use in confectionery made with no yeast is provided, and such dough is produced by a process including the steps of adding a liquid to the rice flour composition, optionally adding any other material thereto, and mixing them. Examples of the liquid to be added include water, cow's milk and egg. Any other materials may be the same as those described above for the rice flour composition. A person skilled in the art would readily set the mixing conditions, depending on the type of the bread or confection to be produced. The dough may be aged as needed depending on the purpose.

The resulting dough according to the invention may include any dough at any stage such as the dough after kneading and before shaping, the shaped dough and the finally-fermented shaped dough. The dough of the invention may be subsequently subjected to the process of making the bread or confection as described below, or may be temporarily stored at low temperatures or in a frozen state. After the cold storage or the frozen storage, the dough may be subjected to the cooking step as described below, as it is or after thawed.

In the first mode of the invention, the method of producing the rice flour bread or confection includes the steps of: mixing the rice flour composition with at least water and yeast and optionally an oil or fat and kneading them; then making dough substantially without undergoing primary fermentation; shaping the dough; subjecting the shaped dough to final fermentation; and cooking the finally fermented dough by baking, frying, steam-boiling, microwave-heating, or pressurizing and heating it.

The steps of making the dough, shaping the dough and finally fermenting the dough may be performed as shown above.

The dough may be cooked by any known method such as baking, frying, steam-boiling, microwave heating, and pressurizing and heating. In the baking process, for example, the dough may be heated from an upper side and/or a lower side in an oven, or may be brought into direct contact with a previously heated furnace face and heated. In the frying process, for example, the dough may be heated by cooking with edible oil, so called frying up or deep-frying. In the steam-boiling process, for example, the dough may be heated in a steamer, which is placed on a flame to produce steam, or may be heated in a vessel with steam, which is previously produced in a boiler and then fed into the vessel. In the microwave heating process, for example, the dough may be heated using a device or an apparatus having the function of generating and applying microwave. In the pressurizing and heating process, for example, the dough may be pressurized and heated in a pressure cooker or an apparatus having the function of heating at a high temperature under a high pressure.

In the step of shaping the dough, any filling such as sweetened paste or jam of beans or the like (*an*), curry and any delicatessen may advantageously be wrapped in the dough, so that bean-jam bun, curry bread, delicatessen bread, Chinese style steamed bread, or the like can be finally produced. On the other hand, after the dough is heated, dairy cream, custard cream or the like may be added to form a confection product.

As regards the method of producing the bread or confection in the first mode, the time required for the whole process, including the bench time (15 to 25 minutes), will be about 60 to about 150 minutes, and high quality rice-flour bread with good appearance, good internal phase and good taste can be produced in such a time period. Such a required time period is half or less of the time required for the process of making wheat flour bread. Thus, the inventive method can provide good workability.

In the second mode of the invention, the method of producing the rice flour bread or confection includes the steps of adding water and yeast to the rice flour composition and mixing them, fermenting the mixture to make dough, shaping the fermented dough, and cooking the shaped dough by baking, frying, steam-boiling, microwave-heating, or pressurizing and heating it.

In the second mode, the primary fermentation time (floor time) is preferably from 30 to 50 minutes. A good state of primary fermentation can be produced only under the control of the floor time within this range, as long as the kneading temperature does not significantly go out of the above range of from 20 to 30°C. A bench time of 15 to 20 minutes is then preferably provided.

The inventive method of producing the rice flour bread or confection includes the steps of shaping the fermented dough and cooking the shaped dough by baking, frying, steam-boiling, microwave-heating, or pressurizing and heating it. When fermented dough is produced, the proofing time is preferably given after the shaping and before the cooking.

In terms of producing a good fermentation state in the above process, the floor time and the proofing time are each preferably 30 minutes or more, more preferably from 40 to 50 minutes. When the inventive rice flour composition is used, the time required for the whole process, including the bench time (15 to 20 minutes), will be about 120 to about 150 minutes, and high quality rice-flour bread with good appearance, good internal phase and good taste can be produced In such a time period. Such a required time period is half or less of the time required for the process of making wheat flour bread. Thus, the inventive method can provide good workability.

In the second or third mode of the invention, the method of producing the rice flour bread or confection includes the steps of shaping the dough and cooking the shaped dough by baking, frying, steam-boiling, microwave-heating, or pressurizing and heating it.

The method of cooking the fermented dough or the dough may be the same as in the first mode.

In the step of shaping the dough or the fermented dough, any filling such as sweetened paste or jam of beans or the like (*an*), curry and any delicatessen may advantageously be wrapped in the dough, so that bean-jam bun, curry bread, delicatessen bread, Chinese style steamed bread, or the like can be finally produced. On the other hand, after the dough is heated, dairy cream, custard cream or the like may be added to form a cake, a cream puff or the like.

The rice flour bread or confection produced by the inventive method covers a wide variety of fermented breads or confections such as white table broad, bread type roll, butter roll, deep-fried bread, confectionery bread, French bread, German bread, bagel, Danish pastry, Chinese style steamed bread, yeast doughnut, pretzel, pizza, and nan; and a wide variety of unfermented breads or confections such as cake, pie, scone, muffin, and cream puff. Examples of the bread and confection are not limited to the above and may also include any other products produced with the inventive rice flour composition by the inventive method.

The rice flour bread or confection produced as shown above can have good keeping quality and can easily be stored at low temperatures or in a frozen state. The stored rice flour bread or confection can advantageously be heated or thawed as needed for enjoyment of its taste.

### EXAMPLES

The constitution and effect of the invention are more specifically described in the examples below.

### Test Example 1

### Measurement of Rice-Flour Particle Size Distribution

Different types of rice flour as shown in Table 1 were measured for particle size distribution using standard sieves of 50 to 270 meshes and a sonic sifter (manufactured by ATM Corporation).

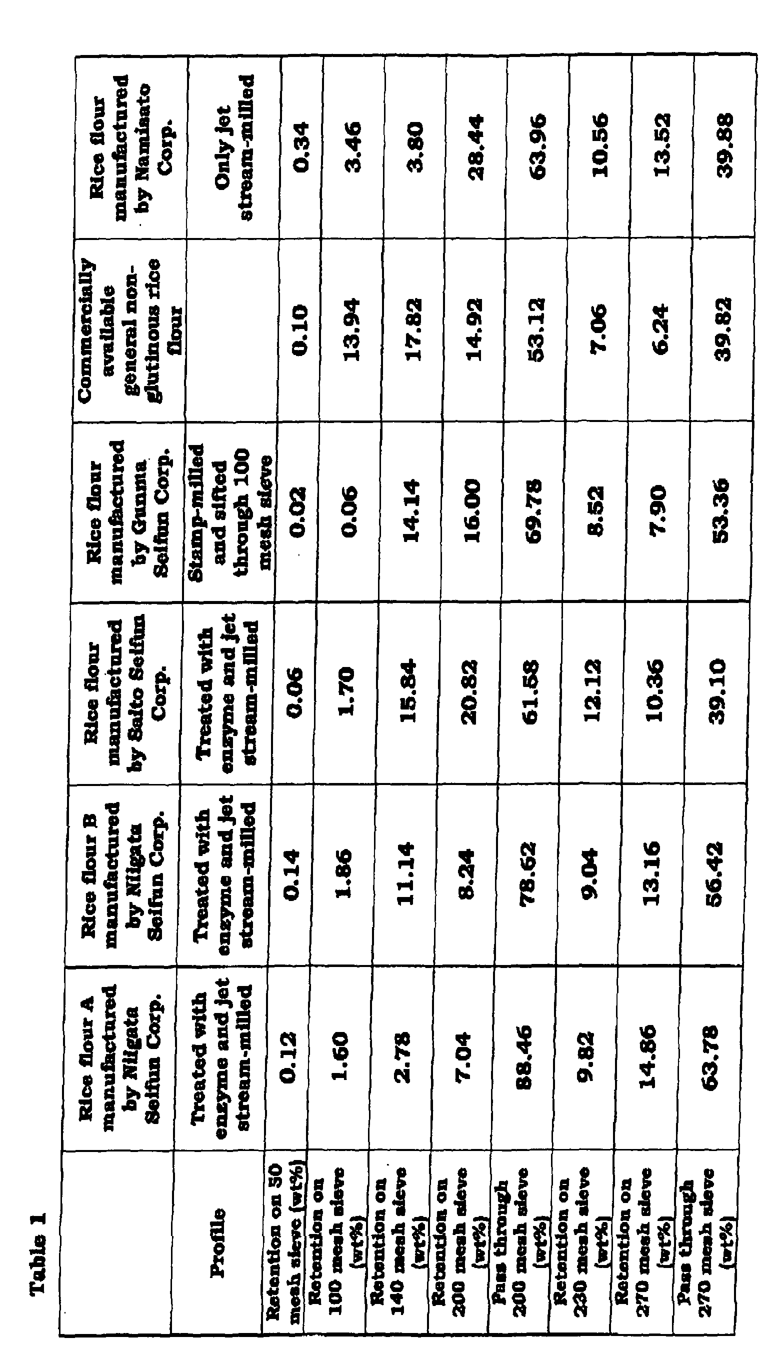

Table 1 indicates that in the rice flour used in each of Examples 1 to 11 below, the total content of the fractions retained on the 140 mesh sieve and the 200 mesh sieve, respectively, is from about 30 to 35% by weight.

### Example 1

### Production of Bread-Type Rice-Flour Roll

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 6 parts by weight of sucrose, 2 parts by weight of salt, 3 parts by weight of skimmed milk powder, and 0.1 parts by weight of yeast food in a mixer to form a flour premix. In a mixer, 3 parts by weight of marine yeast (manufactured by San-Kyo Foods Corporation) and 88 parts by weight of water were mixed with the flour premix, and the mixture was kneaded at 26°C at a low speed for 5 minutes and at a medium speed for 3 minutes. While the kneading was temporarily stopped, 6 parts by weight of shortening was added. The resulting mixture was then kneaded at a medium speed for 3 minutes to form dough.

The dough was then fermented for 40 minutes in the floor time step. The dough was cut into 80 g pieces, and each piece was rounded. After a bench time of 15 minutes was taken, each piece was shaped. Part of the shaped pieces was stored at -20°C in a frozen state.

The shaped dough pieces were fermented in a proofer at 38°C at a humidity of 80% for 40 minutes. After the fermentation step was completed, the dough pieces were baked in an oven at 230°C (direct heat) and 200°C (indirect heat) for 14 minutes so that pieces of bread-type rice-flour roll were obtained.

### Comparative Example 1

### Production of Bread-Type Wheat-Flour Roll

Dough was prepared using the process of Example 1, except that 102.5 parts by weight of wheat flour and 68 parts by weight of water were used in place of 85 parts by weight of non-glutinous rice flour, 15 parts by weight of wheat gluten and 2.5 parts by weight of maltose.

The dough was then fermented for 120 minutes in the floor time step. The dough was cut into 80 g pieces, and each piece was rounded. After a bench time of 20 minutes was taken, each piece was shaped. Part of the shaped pieces was stored at -20°C in a frozen state.

The shaped dough was fermented in a proofer at 38°C at a humidity of 80% for 50 minutes. After the fermentation step was completed, the dough pieces were baked in an oven at 230°C (direct heat) and 200°C (indirect heat) for 14 minutes so that pieces of bread-type wheat-flour roll were obtained.

### Evaluation Test 1

Seven tasters each carried out a sensory test on the appearance, internal phase and taste feelings of bread-type rice-flour roll of Example 1 and bread-type wheat-flour roll of Comparative Example 1, and made an evaluation with respect to the evaluation items below.
(1) Appearance was evaluated by dent, expansion and color tone.
(2) Internal phase was evaluated by texture, color tone and touch feeling of a cut surface.
(3) Taste feelings were evaluated by flavor including taste and smell as the main part and by chew feeling including texture as the main part.

The expansion and the color tone of the bread-type rice-flour roll were an good as those of the wheat-flour one. In addition, while the wheat-flour roll had a dent after the baking, the rice-flour roll was free from such a dent. Concerning the internal phase, the texture, the color tone and the touch feeling of the rice-flour roll were good and compared favorably with those of the wheat-flour roll. Concerning the taste feelings, the rice-flour roll smoothly melted in the mouth and had a moist taste and a faint aroma of the rice flour. The resulting evaluation of the rice-flour roll was equal to or higher than that of the wheat-flour roll.

### Evaluation Test 2

### Influence of Freezing on Taste Feelings of the Bread Type Roll

The dough for bread-type rice-flour roll of Example 1 and the dough for bread-type wheat-flour roll of Comparative Example 1 were each stored at -20°C in a frozen state and after 30 days, thawed at room temperature. Similarly to Example 1 or Comparative Example 1, the proofing time was taken, and then the dough pieces were baked in an oven so that pieces of bread type rice-flour or wheat-flour roll were obtained. Seven tasters each carried out a sensory test on the taste feelings of the bread type rolls. As a result, the rice-flour roll still had a moist taste and showed almost no change in taste feelings after the freezing and thawing, while the wheat-flour roll had a rough texture, and it was felt that degradation in taste should be caused by freezing.

### Example 2

### Production of white Rice Bran-Containing, Bread-Type, Rice-Flour Roll

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.2 parts by weight of dextrin, 6.6 parts by weight of sucrose, 2.2 parts by weight of salt, 3.3 parts by weight of skimmed milk powder, and 0.11 parts by weight of yeast food in a mixer to form a flour premix. In a mixer, 3.3 parts by weight of marine yeast (manufactured by San-Kyo Foods Corporation) and 94 parts by weight of water were mixed with the flour premix, and the mixture was kneaded at 26°C at a low speed for 5 minutes and at a medium speed for 3 minutes. While the kneading was temporarily stopped, 6.6 parts by weight of shortening was added. The resulting mixture was then kneaded at a medium speed for 3 minutes to form dough.

The dough was fermented, shaped and baked similarly to Example 1 so that white rice bran-containing, bread-type, rice-flour roll was obtained.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting bread type roll had a significantly increased volume, a puffy state, a good color tone, a good texture of the cut surface, and a good taste. In contrast to the roll of Example 1, the roll of this example had a sweet taste derived from the white rice bran. After the roll was allowed to stand for a week in a refrigerator (5°C), its taste feelings almost did not change, and a rough texture by hardening was not observed. Thus, it had a good keeping quality.

### Example 3

### Production of Bread-Type Brown-Rice Roll

Bread-type brown-rice roll was prepared using the process of Example 2, except that stamp milled brown-rice flour (with a water content of 14%), in which the fraction passing through a 70 mesh sieve made up at least 90% of the flour, was used in place of the non-glutinous rice flour.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting bread-type brown-rice roll had a significantly increased volume, a puffy state, a good color tone, a good texture of the cut surface, and a good taste. After the roll was allowed to stand for a week in a refrigerator (5°C), its taste feelings almost did not change, and a rough texture by hardening was not observed. Thus, it had a good keeping quality.

### Example 4

### Production of Bean-Jam Rice-Flour Bun

Mixed were 84 parts by weight of non-glutinous rice flour (*Joshinko* with a water content of 14% manufactured by Matsumoto Foods Corporation and produced by stamp milling), 16 parts by weight of wheat gluten (A-Gul GX (trade name) manufactured by Glico Foods Co., Ltd.), 2.5 parts by weight of maltose, 10 parts by weight of white rice bran (*Johakuko*), 2.2 parts by weight of dextrin, 22 parts by weight of sucrose, 1.1 parts by weight of salt, and 3.3 parts by weight of skimmed milk powder in a mixer to form a flour premix. In a mixer, 4.4 parts by weight of marine yeast (manufactured by San-Kyo Foods Corporation), 16.5 parts by weight of whole egg and 77.5 parts by weight of water were mixed with the flour premix, and the mixture was kneaded at 26°C at a low speed for 5 minutes and at a medium speed for 3 minutes. While the kneading was temporarily stopped, 11 parts by weight of margarine was added. The resulting mixture was then kneaded at a medium speed for 3 minutes to form dough.

The dough was then fermented for 50 minutes in the floor time step. The dough was cut into 40 g pieces, and each piece was rounded. After a bench time of 20 minutes was taken, each piece was filled with sweetened bean jam and shaped. The shaped pieces were fermented in a proofer at 38°C at a humidity of 80% for 50 minutes. After the fermentation step was completed, the dough pieces were baked in an oven at 210°C (direct heat) and 200°C (indirect heat) for 8 minutes so that pieces of bean-jam rice-flour bun were obtained.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting bean-jam bun had a significantly increased volume, a puffy state, a good color tone, a good texture of the cut surface, and a good taste. After the bun was allowed to stand for a week in a refrigerator (5°C), its taste feelings almost did not change, and a rough texture by hardening was not observed. Thus, it had a good keeping quality.

### Example 5

### Production of White Table Rice-Flour Bread

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.2 parts by weight of dextrin, 6.6 parts by weight of sucrose, 2.2 parts by weight of salt, 3.3 parts by weight of skimmed milk powder, and 0.11 parts by weight of yeast food in a mixer to form a flour premix. In a mixer, 3.3 parts by weight of marine yeast (manufactured by San-Kyo Foods Corporation) and 94 parts by weight of water were mixed with the flour premix, and the mixture was kneaded at 26°C at a low speed for 5 minutes and at a medium speed for 3 minutes. While the kneading was temporarily stopped, 6.6 parts by weight of unsalted butter was added. The resulting mixture was then kneaded at a medium speed for 4 minutes to form dough.

The dough was then fermented for 40 minutes in the floor time step. The dough was cut at a specific volume of 3.7, and each piece was rounded. After a bench time of 15 minutes was taken, each piece was placed in a mold with a mold space of 3.5 cm and shaped to have a mountain form. Each shaped piece was fermented in a proofer at 38°C at a humidity of 80% for 40 minutes. After the fermentation step was completed, the dough pieces were baked in an oven at 210°C (direct heat) and 240°C (indirect heat) for 45 minutes so that loafs of mountain-shaped, table, white, rice-flour bread were obtained.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting mountain-shaped table white bread had a significantly increased volume, a puffy state, a good color tone, a good texture of the cut surface, and a good taste. After the bread was allowed to stand for a week in a refrigerator (5°C), its taste feelings almost did not change, and a rough texture by hardening was not observed. Thus, it had a good keeping quality.

### Example 6

### Production of Rice-Flour Butter Roll

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.4 parts by weight of dextrin, 14.4 parts by weight of sucrose, 2.04 parts by weight of salt, 3.3 parts by weight of skimmed milk powder, and 0.11 parts by weight of yeast food in a mixer to form a flour premix. In a mixer, 3.6 parts by weight of marine yeast (manufactured by San-Kyo Foods Corporation), 18 parts by weight of whole egg, 24 parts by weight of cow's milk, and 46 parts by weight of water were mixed with the flour premix, and the mixture was kneaded at 26°C at a low speed for 5 minutes and at a medium speed for 4 minutes. While the kneading was temporarily stopped, 14.4 parts by weight of unsalted butter was added. The resulting mixture was then kneaded at a medium speed for 4 minutes to form dough.

The dough was then fermented for 40 minutes in the floor time step. The dough was cut into 40 g pieces, and each piece was rounded. After a bench time of 15 minutes was taken, each piece was shaped into a roll form. The shaped pieces were fermented in a proofer at 38°C at a humidity of 80% for 40 minutes. After the fermentation step was completed, the dough pieces were baked in an oven at 220°C (direct heat) and 200°C (indirect heat) for 10 minutes so that roll pieces were obtained.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting roll had a significantly increased volume, a puffy state, a good color tone, a good texture of the cut surface, and a good taste. After the roll was allowed to stand for a week in a refrigerator (5°C), its taste feelings almost did not change, and a rough texture by hardening was not observed. Thus, it had a good keeping quality.

### Example 7

### Production of Danish Rice-Flour Pastry

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.4 parts by weight of dextrin, 12 parts by weight of sucrose, 2.5 parts by weight of salt, 4.8 parts by weight of skimmed milk powder, and 0.11 parts by weight of yeast food in a mixer to form a flour premix. In a mixer, 4.8 parts by weight of marine yeast (manufactured by San-Kyo Foods Corporation) and 94 parts by weight of water were mixed with the flour premix, and the mixture was kneaded at 26°C at a low speed for 5 minutes and at a medium speed for 4 minutes. While the kneading was temporarily stopped, 6 parts by weight of unsalted butter was added. The resulting mixture was then kneaded at a medium speed for 2 minutes to form dough.

The dough was then fermented for 20 minutes in the floor time step. The dough was cut into 238 g pieces. Each piece was shaped into a sheet and aged at -10°C for 30 minutes. Each sheet piece was then folded in three twice, aged at -10°C for 30 minutes and folded in three once again. Each dough piece was then spread to have a thickness of 3 mm and cut into narrow triangle pieces. Each piece was then shaped and fermented in a proofer at 30°C for 40 minutes without moistening. After the fermentation step was completed, the shaped pieces were baked in an oven at 230°C (direct heat) and 200°C (indirect heat) for 13 minutes so that pieces of rice-flour croissant, a kind of Danish rice-flour pastry, were obtained.

The croissant dough as prepared was not adhesive and had good handleability and good machinability. The production time was reduced to about half of that in the wheat flour case; the expansion of the dough during fermentation was the same as in the wheat flour case; and the workability was good. The resulting croissant had a significantly increased volume, a puffy state, a good color tone, a good texture of the cut surface, and a good taste. After the rice-flour croissant was allowed to stand for a week in a refrigerator (5°C), its taste feelings almost did not change, and a rough texture by hardening was not observed. Thus, it had a good keeping quality.

### Example 8

### Production of Rice-Flour Curry Bread

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.4 parts by weight of dextrin, 6 parts by weight of sucrose, 2.4 parts by weight of salt, 3.6 parts by weight of skimmed milk powder, 2.16 parts by weight of baking powder, and 0.11 parts by weight of yeast food in a mixer to form a flour premix. In a mixer, 3.6 parts by weight of marine yeast (manufactured by San-Kyo Foods Corporation) and 94 parts by weight of water were mixed with the flour premix, and the mixture was kneaded at 26°C at a low speed for 5 minutes and at a medium speed for 3 minutes. While the kneading was temporarily stopped, 6.6 parts by weight of shortening was added. The resulting mixture was then kneaded at a medium speed for 2 minutes to form dough.

The dough was then fermented for 40 minutes in the floor time step. The dough was cut into 40 g pieces, and each piece was rounded. After a bench time of 15 minutes was taken, each piece was filled with curry and shaped. The shaped pieces were fermented in a proofer at 38°C at a humidity of 75% for 40 minutes. After the fermentation step was completed, the dough pieces were baked in an oven at 170°C (direct heat) and 200°C (indirect heat) for 8 minutes and then deep-fried in oil at 170°C so that pieces of rice-flour curry bread were obtained.

The dough prepared in this example was not adhesive and had good handleability and good machinability. The fermentation time in the floor time step and the proofing step was reduced to about half of that in the wheat flour case; the expansion of the dough during fermentation was the same as in the wheat flour case; and the workability was good. The resulting rice-flour curry bread had a significantly increased volume, a puffy state, a good color tone, and a good taste.

### Example 9

### Production of Bread-Type Rice-Flour Roll

Bread-type rice-flour roll was produced using the process of Example 1, except that a rice flour manufactured by Gunma Seifun Corporation (a product of stamp milling and sifting through a 100 mesh sieve, in which the total content of the fractions retained on the 140 mesh sieve and the 200 mesh sieve, respectively, was about 30% by weight) was used in place of the non-glutinous rice flour manufactured by Matsumoto Foods Corporation.

### Example 10

### Production of Bread-Type Rice-Flour Roll

Bread-type rice-flour roll was produced using the process of Example 1, except that a rice flour manufactured by Namisato Corporation (a product of jet stream-milling raw rice, in which the total content of the fractions retained on the 140 mesh sieve and the 200 mesh sieve, respectively, was about 32% by weight) was used in place of the non-glutinous rice flour manufactured by Matsumoto Foods Corporation.

### Example 11

### Production of Bread-Type Rice-Flour Roll

Bread-type rice-flour roll was produced using the process of Example 1, except that a rice flour manufactured by Gunma Seifun Corporation (a product of water milling and sifting through a 100 mesh sieve, in which the total content of the fractions retained on the 140 mesh sieve and the 200 mesh sieve, respectively, was about 30% by weight) was used in place of the non-glutinous rice flour manufactured by Matsumoto Foods Corporation.

### Evaluation Test 3

Seven tasters each carried out a sensory test on the appearance, internal phase and taste feelings of bread-type rice-flour roll of Examples 1, 9, 10, and 11, and made an evaluation with respect to the evaluation items below.
(1) Appearance was evaluated by dent, expansion and color tone.
(2) Internal phase was evaluated by texture, color tone and touch reeling of a cut surface.
(3) Taste feelings were evaluated by flavor including taste and smell as the main part and by chew feeling including texture as the main part.

The four types of bread-type rice-flour roll were the same in appearance, internal phase and taste, and had no dent after the baking. Concerning the internal phase, the texture, the color tone and the touch feeling of each roll were good. Concerning the taste feelings, each roll smoothly melted in the mouth and had a moist taste and a faint aroma of the rice flour.

### Example 12

### Production of Bread-Type Rice-Flour Roll

Mixed were 85 parts by weight of non glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 6 parts by weight of sucrose, 2 parts by weight of salt, 3 parts by weight of skimmed milk powder, and 0.1 parts by weight of yeast food in a mixer to form a flour premix. In a mixer, 3 parts by weight of marine yeast (manufactured by San-Kyo Foods Corporation), 88 parts by weight of water and 6 parts by weight of shortening were mixed with the flour premix, and the mixture was kneaded at 26°C at a low speed for 6 minutes and at a high speed for 4 minutes.

The dough was cut into 80 g pieces without any floor time, and each piece was rounded. After a bench time of 15 minutes was taken, each piece was shaped. Part of the shaped pieces was stored at -20°C in a frozen state.

The shaped dough pieces were fermented in a proofer at 38°C at a humidity of 80% for 40 minutes. After the fermentation step was completed, the dough pieces were baked in an oven at 230°C (direct heat) and 200°C (indirect heat) for 14 minutes so that pieces of bread-type rice-flour roll were obtained.

### Comparative Example 2

### Production of Bread-Type Wheat-Flour Roll

A flour premix was prepared using the process of Example 1, except that 102.5 parts by weight of wheat flour was used in place of 85 parts by weight of non-glutinous rice flour, 15 parts by weight of wheat gluten and 2.5 parts by weight of maltose. In a mixer, 3 parts by weight of marine yeast (manufactured by San-Kyo Foods Corporation) and 68 parts by weight of water were mixed with the flour premix, and the mixture was kneaded at 26°C at a low speed for 5 minutes and at a medium speed for 3 minutes. While the kneading was temporarily stopped, 6 parts by weight of shortening was added. The resulting mixture was then kneaded at a medium speed for 3 minutes to form dough.

The dough was then fermented for 120 minutes in the floor time step. The dough was cut into 80 g pieces, and each piece was rounded. After a bench time of 20 minutes was taken, each piece was shaped. Part of the shaped pieces was stored at -20°C in a frozen state.

The shaped dough pieces were fermented in a proofer at 38°C at a humidity of 80% for 50 minutes. After the fermentation step was completed, the dough pieces were baked in an oven at 230°C (direct heat) and 200°C (indirect heat) for 14 minutes so that pieces of bread-type wheat-flour roll were obtained.

### Evaluation Test 4

Seven tasters each carried out a sensory test on the appearance, internal phase and taste feelings of bread-type rice-flour roll of Example 12 and bread-type wheat-flour roll of Comparative Example 2, and made an evaluation with respect to the evaluation items below.
(1) Appearance was evaluated by dent, expansion and color tone.
(2) Internal phase was evaluated by texture, color tone and touch feeling of a cut surface.
(3) Taste feelings were evaluated by flavor including taste and smell as the main part and by chew feeling including texture as the main part.

The expansion and the color tone of the bread-type rice-flour roll were as good as those of the wheat-flour one. In addition, while the wheat-flour roll had a dent after the baking, the rice-flour roll was free from such a dent. Concerning the internal phase, the texture, the color tone and the touch feeling of the rice-flour roll were good and compared favorably with those of the wheat-flour roll. Concerning the taste feelings, the rice-flour roll smoothly melted in the mouth and had a moist taste and a faint aroma of the rice flour. The resulting evaluation of the rice-flour roll was equal to or higher than that of the wheat-flour roll.

### Evaluation Test 5

### Influence of Freezing on Taste Feelings of the Bread Type Roll

The dough for bread-type rice-flour roll of Example 12 and the dough for bread-type wheat-flour roll of Comparative Example 2 were each stored at -20°C in a frozen state and after 30 days, thawed at room temperature. Similarly to Example 12 or Comparative Example 2, the proofing time was taken, and then the dough pieces were baked in an oven so that pieces of bread type rice-flour or wheat-flour roll were obtained. Seven tasters each carried out a sensory test on the taste feelings of bread type rolls. As a result, the rice-flour roll still had a moist taste and showed almost no change in taste feelings after the freezing and thawing, while the wheat-flour roll had a rough texture, and it was felt that degradation in taste should be caused by freezing.

### Example 13

### Production of White Table Rice-Flour Bread

Mixed were 85 parts by weight of non-glutinous rice flour (*Joshinko* with a water content of 14% manufactured by Matsumoto Foods Corporation and produced by stamp milling), 15 parts by weight of wheat gluten (A-Gul GX (trade name) manufactured by Glico Foods Co., Ltd.), 2.5 parts by weight of maltose, 10 parts by weight of white rice bran (*Johakuko*), 2.2 parts by weight of dextrin, 6.6 parts by weight of sucrose, 2.2 parts by weight of salt, 3.3 parts by weight of skimmed milk powder, and 0.11 parts by weight of yeast food in a mixer to form a flour premix. In a mixer, 3.3 parts by weight of marine yeast (manufactured by San-Kyo Foods Corporation), 94 parts by weight of water and 6.6 parts by weight of unsalted butter were mixed with the flour premix, and the mixture was kneaded at 26°C at a low speed for 6 minutes and at a high speed for 4 minutes.

The dough was cut at a specific volume of 3.7 without any floor time, and each piece was rounded. After a bench time of 15 minutes was taken, each piece was placed in a mold with a mold space of 3.5 cm and shaped to have a mountain form. Each shaped piece was fermented in a proofer at 38°C at a humidity of 80% for 40 minutes. After the fermentation step was completed, the dough pieces were baked in an oven at 210°C (direct heat) and 240°C (indirect heat) for 45 minutes so that loafs of mountain-shaped, table, white, rice-flour bread were obtained.

The dough prepared in this example was not adhesive and had good handleability and good machinability. In contrast to the wheat flour case, the floor time was omitted, and the fermentation time in the proofing step was reduced to about half of that in the wheat flour case. The expansion of the dough during fermentation was the same as in the wheat flour case, and the workability was good. The resulting mountain-shaped table white bread had a significantly increased volume, a puffy state, and a good color tone, and it was cut (sliced) well. It also had a good texture of the cut surface and a good taste. After the bread was allowed to stand for a week in a refrigerator (5°C), its taste feelings almost did not change, and a rough texture by hardening was not observed. Thus, it had a good keeping quality.

### Test Example 2

### Measurement of Rice-Flour Particle Size Distribution

Different types of milling method according to the invention were used to produce rice flour. The resulting different types of rice flour were each measured for particle size distribution using standard sieves of 50 to 230 meshes and a sonic sifter (manufactured by ATM Corporation). Table 2 shows standard distribution of rice flour particle sizes for use in the inventive method of producing the rice flour bread or confection.

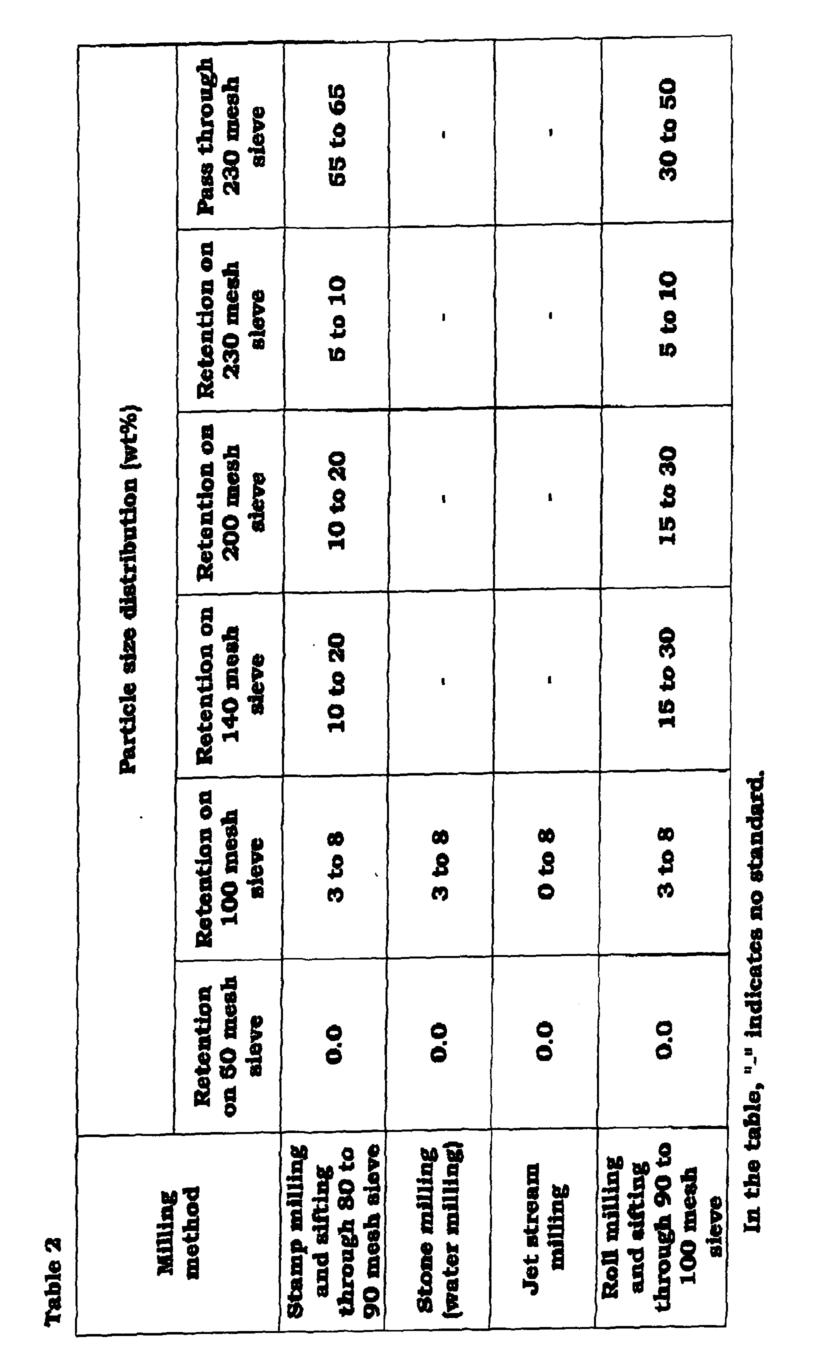

Investigations were made to find out what rice-flour particle size distribution is preferably used in the inventive product or process. Thus, two types of rice flour were prepared. One type of rice flour was prepared by a process including the steps of washing polished non-glutinous rice and drying it, then pulverizing it by stamp milling, and sifting the resulting rice flour through a 80 mesh sieve (water content: 12.8%). The other type of rice flour was prepared by a process including the steps of pulverizing polished non-glutinous rice by hammer milling without washing, and sifting the resulting rice flour through a 100 mesh sieve (water content: 12.6%).

The resulting two types of rice flour were each measured for particle size distribution using standard sieves of 50 to 270 meshes and a sonic sifter (manufactured by ATM Corporation). The results are shown in Table 3.

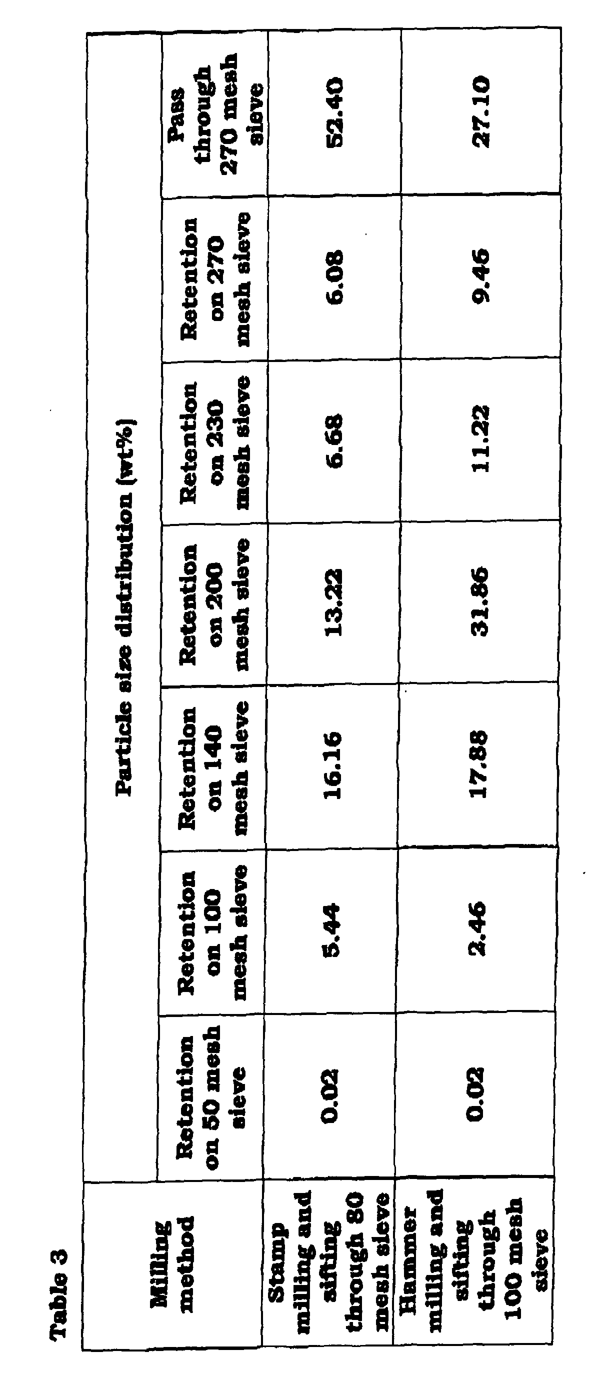

### Example 14

### Production of Bread-Type Roll with Rice Flour Sifted Through Sieve

Mixed were 85 parts by weight of non-glutinous rice flour (*Joshinko* prepared by stamp milling followed by sifting through a 80 mesh sieve), 15 parts by weight of wheat gluten (A-Gul GX (trade name) manufactured by Glico Foods Co., Ltd.), 2.5 parts by weight of maltose, 6 parts by weight of sucrose, 2 parts by weight of salt, 3 parts by weight of skimmed milk powder, and 0.1 parts by weight of yeast food in a mixer to form a flour premix. In a mixer, 3 parts by weight of marine yeast (manufactured by San-Kyo Foods Corporation), 88 parts by weight of water and 6 parts by weight of shortening were mixed with the flour premix, and the mixture was kneaded at 26°C at a low speed for 6 minutes and at a high speed for 4 minutes to form dough.

The dough was then cut into 80 g pieces without any floor time, and each piece was rounded. After a bench time of 15 minutes was taken, each piece was shaped.

The shaped dough pieces were fermented in a proofer at 38°C at a humidity of 80% for 40 minutes. After the fermentation step was completed, the dough pieces were baked in an oven at 230°C (direct heat) and 200°C (indirect heat) for 14 minutes so that pieces of bread-type rice-flour roll were obtained.

### Comparative Example 3

### Production of Bread-Type Rice-Flour Roll by Known Method

Bread-type rice-flour roll was prepared according to the method as disclosed in JP-A No. 2002-95404. Mixed were 86 parts by weight of non-glutinous rice flour (*Joshinko* prepared by stamp milling followed by sifting through a 70 mesh sieve, wherein after the shifting, rice flour particle diameters were mainly distributed in the range of from 180 to 200 µm), 12 parts by weight of wheat gluten (A-Gul GX (trade name) manufactured by Glico Foods Co., Ltd.), 2 parts by weight of dextrin as a thickener, 9 parts by weight of sucrose, 5 parts by weight of salt, 5.5 parts by weight of skimmed milk powder, 3.5 parts by weight of marine yeast (manufactured by San-Kyo Foods Corporation), and 76 parts by weight of water to form bread dough.

The dough was cut into 80 g pieces, and each piece was rounded and shaped. The shaped dough pieces were fermented in a proofer at 28°C at a humidity of 72% for 55 minutes. After the fermentation step was completed, the dough pieces were baked in an oven at 230°C (direct heat) and 200°C (indirect heat) for 14 minutes so that pieces of bread-type rice-flour roll were obtained.

### Evaluation Test 6

Seven tasters each carried out a sensory test on the appearance, internal phase and taste feelings of bread-type rice-flour roll of Examples 14 and Comparative Example 3, and made an evaluation with respect to the evaluation items below.
(1) Appearance was evaluated by dent, expansion and color tone.
(2) Internal phase was evaluated by texture, color tone and touch feeling of a cut surface.
(3) Taste feelings were evaluated by flavor including taste and smell as the main part and by chew feeling including texture as the main part.

The expansion and the color tone of the bread-type rice-flour roll of Example 14 were as good as those of the wheat-flour roll of Comparative Example 2. Concerning the internal phase, the color tone and the touch feeling of the rite-flour roll of Example 14 were good and compared favorably with those of the wheat-flour roll. Concerning the taste feelings, the rice-flour roll of Example 14 smoothly melted in the mouth and had a moist taste and a faint aroma of the rice flour. The resulting evaluation of the rice-flour roll of Example 14 was equal to or higher than that of the wheat-flour roll.

In contrast, the expanded volume of the bread-type rice-flour roll of Comparative Example 3 was about half of that of Example 14. The roll of Comparative Example 3 was highly brown-colored and significantly differed in appearance from the rice-flour roll of Example 14 or the wheat-flour roll of Comparative Example 2. Concerning internal phase, the roll of Comparative Example 3 had hard tough feeling, and it appeared that the fermentation did not proceed well. It also tasted hard and salty, and did not smoothly melt in the mouse.

### Example 15

### Production of White Table Rice-Flour Bread

Mixed were 82 parts by weight of non-glutinous rice flour (*Joshinko* with a water content of 12.3% and produced by jet stream milling), 18 parts by weight of wheat gluten (A-Gul GX (trade name) manufactured by Glico Foods Co., Ltd.), 2.5 parts by weight of maltose, 6 parts by weight of sucrose, 2 parts by weight of salt, and 5 parts by weight of skimmed milk powder in a mixer to form a flour premix. In a mixer, 2.5 parts by weight of marine yeast (manufactured by San-Kyo Foods Corporation), 75 parts by weight of water and 8 parts by weight of unsalted butter were mixed with the flour premix, and the mixture was kneaded at 26°C at a low speed for 6 minutes and at a high speed for 4 minutes to form dough.

The dough was cut at a specific volume of 3.7 without any floor time, and each piece was rounded. After a bench time of 15 minutes was taken, each piece was placed in a mold with a mold space of 3.5 em and shaped to have a mountain form. Each shaped piece was fermented in a proofer at 38°C at a humidity of 80% for 60 minutes. After the fermentation step was completed, the dough pieces were baked in an oven at 220°C (direct heat) and 230°C (indirect heat) for 50 minutes so that loafs of mountain-shaped, table, white, rice-flour bread were obtained.

The dough prepared in this example was not adhesive and had good handleability and good machinabluty. In contrast to the wheat flour case, the floor time was omitted, and the fermentation time in the proofing step was reduced to about half of that in the wheat flour case. The expansion of the dough during fermentation was the same as in the wheat flour case, and the workability was good. The resulting mountain-shaped table white bread had a significantly increased volume, a puffy state, and a good color tone, and it was cut (sliced) well. It also had a good texture of the cut surface and a good taste. After the bread was allowed to stand for a week in a refrigerator (5°C), its taste feelings almost did not change, and a rough texture by hardening was not observed. Thus, it had a good keeping quality.

### Industrial Applicability

According to the inventive rice flour composition, the inventive dough, or the inventive method of producing rice flour bread or confection using the inventive composition or the inventive dough, breads or confectionery excellent in appearance, internal phase, taste, and keeping quality can be produced with a rice flour produced by a conventional flour milling method through a process similar to a conventional process of making breads or confectionery.

## Claims

1. A rice flour composition for use in breads or confectionery, comprising: 100 parts by weight of grain flour including 80 to 85 parts by weight of rice flour and 15 to 20 parts by weight of gluten; and 1 to 30 parts by weight of maltose, wherein the rice flour is a product of stamp milling, roll milling, stone milling, jet stream milling, or high speed rotation impact milling.

2. The rice flour composition according to Claim 1, wherein with respect to particle size, the rice flour contains a fraction retained on a 140 mesh sieve and a fraction retained on a 200 mesh sieve, wherein the total of both fractions make up 20 to 50% by weight of the rice flour.

3. The rice flour composition according to Claim 1 or 2, wherein the rice flour is a product of stone milling.

4. The rice flour composition according to Claim 3, wherein the stone milling is water milling.

5. The rice flour composition according to any one of Claims 1 to 4, further comprising 1 to 30 parts by weight of white rice bran.

6. The rice flour composition according to any one of Claims 1 to 5, further comprising one or more additives selected from the group consisting of sugars, exclusive of maltose, salt, gums, milk components, egg components, fats and oils, inorganic salts, and vitamins.

7. A method of producing a dough product for use in breads or confectionery, comprising the steps of: using a rice flour composition comprising 100 parts by weight of grain flour including 80 to 85 parts by weight of rice flour and 15 to 20 parts by weight of gluten, and 1 to 30 parts by weight of maltose; mixing the rice flour composition with at least water and yeast and optionally an oil or fat and kneading them; and then making dough substantially without undergoing primary fermentation.

8. The method according to Claim 7, further comprising the step of shaping the produced dough.

9. The method according to Claim 7 or 8, wherein the time required for the primary fermentation is 0 to 30 minutes.

10. The method according to Claim 8 or 9, further comprising the step of subjecting the shaped dough to final fermentation.

11. A dough product for use in rice flour breads or confectionery, produced by the method according to any one of Claims 7 to 10.

12. A dough product, produced by the action of yeast on the rice flour composition according to any one of Claims 1 to 6.

13. A dough product, produced by the addition of a liquid to the rice flour composition according to any one of Claims 1 to 6.

14. A method of producing a rice flour bread or confection product, comprising the steps of: using a rice flour composition comprising 100 parts by weight of grain flour including 80 to 85 parts by weight of rice flour and 15 to 20 parts by weight of gluten, and 1 to 30 parts by weight of maltose; mixing the rice flour composition with at least water and yeast and optionally an oil or fat and kneading them; then making dough substantially without undergoing primary fermentation; shaping the dough; subjecting the shaped dough to final fermentation; and cooking the finally fermented dough by baking, frying, steam-boiling, microwave-heating, or pressurizing and heating it.

15. The method according to Claim 14, wherein the time required for the primary fermentation is 0 to 30 minutes.

16. A method of producing a bread or confection product using a rice flour as a main ingredient, comprising the steps of: mixing the rice flour composition according to any one of Claims 1 to 6 with water and yeast and fermenting the mixture to make fermented dough; and shaping the fermented dough and cooking the shaped dough by baking, frying, steam-boiling, microwave-heating, or pressurizing and heating it.

17. A method of producing a bread or confection product using a rice flour as a main ingredient, comprising the steps of: mixing the rice flour composition according to any one of Claims 1 to 6 with a liquid to make dough; and shaping the dough and cooking the shaped dough by baking, frying, steam-boiling, microwave-heating, or pressurizing and heating it.

18. A rice flour bread or confection product, produced by the method according to any one of Claims 14 to 17.

19. A rice flour bread or confection product, produced by cooking the dough according to any one of Claims 11 to 13 by baking, frying, steam-boiling, microwave-heating, or pressurizing and heating it.

20. The rice flour bread or confection product according to Claim 18 or 19, wherein the rice flour bread or confection product is white table bread, bread type roll, butter roll, deep-fried bread, confectionery bread, French bread, German bread, bagel, Danish pastry, Chinese style steamed bread, yeast doughnut, pretzel, pizza, or nan; or cake, pie, scone, muffin, or cream puff.
